# FASCICULE DE BREVET EUROPEEN

(11) **EP 3 701 713 B1**
(45) Date de publication et mention de la délivrance du brevet: **08.09.2021**
(21) Numéro de dépôt: 18792401.4
(22) Date de dépôt: 19.10.2018
(51) Int. Cl.: H04N 5/64, H04N 5/38, H04N 5/44, H01Q 3/44, H01Q 21/00, H01Q 1/24

(54) **DISPOSITIF D'AFFICHAGE, APPAREIL DE TÉLÉVISION OU MONITEUR D'ORDINATEUR UTILISANT UN TEL DISPOSITIF D'AFFICHAGE**
ANZEIGEVORRICHTUNG, FERNSEHGERÄT ODER COMPUTERMONITOR MIT VERWENDUNG SOLCH EINER ANZEIGEVORRICHTUNG
DISPLAY DEVICE, TELEVISION SET OR COMPUTER MONITOR USING SUCH A DISPLAY DEVICE

(30) Priorité: 25.10.2017 EP 17306467
(43) Date de publication de la demande: 02.09.2020
(73) Titulaire: Greenerwave, 06560 Valbonne (FR); Centre National de la Recherche Scientifique - CNRS, 75016 Paris (FR); Ecole Supérieure de Physique et de Chimie Industrielles de la Ville de Paris, 75005 Paris (FR)
(72) Inventeur: LEROSEY, Geoffroy, 75010 Paris (FR)
(74) Mandataire: Plasseraud IP
(86) Numéro de dépôt international: PCT/EP2018/078807
(87) Numéro de publication internationale: WO 2019/081385

(56) Documents cités:
- WO-A1-2015/039769
- JP-A- 2013 131 808

## Description

### DOMAINE TECHNIQUE

La présente invention est relative à un dispositif d'affichage, comme par exemple un appareil de télévision ou un moniteur d'ordinateur.

### ETAT DE LA TECHNIQUE ANTERIEURE

Plus particulièrement, l'invention concerne un dispositif d'affichage comprenant :
- une dalle adaptée pour générer un affichage visible sur la face avant,
- un plan de masse adapté pour protéger la dalle de l'environnement électromagnétique, et
- une unité de traitement reliée à la dalle pour commander l'affichage de la dalle, ladite unité de traitement comprenant une antenne de réception et/ou émission d'une onde pour une connexion à un réseau sans fil qui alimente l'unité de traitement avec un flux de données destiné à la commande de l'affichage.

Dans ce type de dispositif d'affichage, le plan de masse protège la dalle de l'environnement électromagnétique pour assurer une qualité de l'affichage, c'est-à-dire conserver sur toute la surface de la dalle une luminosité et/ou un contraste constant et homogène. Cependant, ce plan de masse perturbe la réception et l'émission de l'onde de l'antenne, ce qui réduit le débit de la connexion sans fil.

Ce problème peut être réduit en utilisant une antenne plus performante (plus sensible) telle qu'une antenne comprenant plusieurs éléments d'antenne actifs avec une transmission de type multi-entrées multi-sorties (MIMO). Cependant, le débit reste réduit par rapport à un dispositif d'affichage sans plan de masse.

En outre, les dispositifs d'affichage sont placés de plus en plus souvent près d'un mur. L'antenne se retrouve alors entre le plan de masse du dispositif d'affichage et le mur. Cette disposition réduit encore plus le débit de la connexion sans fil du dispositif d'affichage.

Le document de brevet JP 2013-131808 A divulgue l'utilisation d'une antenne intérieure déportée placée en regard d'un réflecteur afin d'améliorer la réception des signaux de télévision.

### EXPOSE DE L'INVENTION

Un objet de la présente invention a pour but de perfectionner les **dispositifs d'affichage** à connexion sans fil de ce type, notamment pour améliorer le débit en réception et/ou émission de l'antenne.

A cet effet, le dispositif d'affichage comprend en outre une pluralité d'éléments réglables reliés à l'unité de traitement, chaque élément réglable ayant une impédance qui peut être modifiée par l'unité de traitement pour modifier la manière dont l'onde est réfléchie et/ou transmisse par l'élément réglable, ces éléments réglables étant situés du côté arrière du plan de masse.

Grâce à ces dispositions, le dispositif d'affichage est apte à modifier des paramètres de réglages des éléments réglables, et il peut modifier et optimiser sa réception et/ou émission de l'onde de son antenne.

Ainsi, le dispositif d'affichage peut améliorer le débit en réception et/ou émission de l'antenne. De cette manière, l'unité de traitement peut traiter correctement et notamment en temps réel un flux de données destiné à l'affichage sur la dalle. Eventuellement, l'unité de traitement peut interagir avec le fournisseur du flux de données pour obtenir un flux de données avec par exemple une meilleure résolution d'images et/ou vidéo, ce qui améliore grandement la qualité de l'affichage.

Dans divers modes de réalisation du dispositif d'affichage selon l'invention, on peut éventuellement avoir recours en outre à l'une et/ou à l'autre des dispositions suivantes.

Selon un aspect, le plan de masse comprend un contour externe et les éléments réglables sont positionnés sur un ou plusieurs bords du contour externe du plan de masse.

Selon un aspect, le plan de masse comprend un contour externe et les éléments réglables sont positionnés sur tout le contour externe du plan de masse.

Selon un aspect, les éléments réglables sont installés sur le plan de masse et les éléments réglables sont connectés au plan de masse.

Selon un aspect, des éléments réglables sont interconnectés en groupe et le groupe est relié directement à l'unité de traitement.

Selon un aspect, au moins deux éléments du groupe sont placés sur des bords opposés du contour externe du plan de masse.

Selon un aspect, l'unité de traitement détermine des paramètres de réglage de la pluralité d'éléments réglables pour optimiser la réception de l'onde par l'antenne.

Selon un aspect, l'optimisation porte sur une estimation de niveau de réception et/ou une estimation de qualité de réception.

Selon un aspect, l'optimisation utilise également la réception de l'onde émise par l'antenne et reçue par un dispositif annexe connecté au réseau sans fil.

Selon un aspect, l'optimisation minimise la réception d'une autre onde d'un autre réseau sans fil.

Un autre objet de la présente invention est de fournir **un appareil de télévision** comprenant un dispositif d'affichage du type cité ci-dessus et adapté à afficher un flux de données vidéo de diffusion d'une chaine de télévision.

Un autre objet de la présente invention est de fournir **un moniteur d'ordinateur** comprenant un dispositif d'affichage du type cité ci-dessus et adapté à afficher un flux de données correspondant à une image en provenance d'un ordinateur.

### BREVE DESCRIPTION DES DESSINS

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une vue en coupe d'un dispositif d'affichage selon l'invention, et
- la figure 2 est une vue arrière du dispositif d'affichage de la figure 1.

Sur les différentes figures, les mêmes références numériques désignent des éléments identiques ou similaires.

### DESCRIPTION DETAILLEE

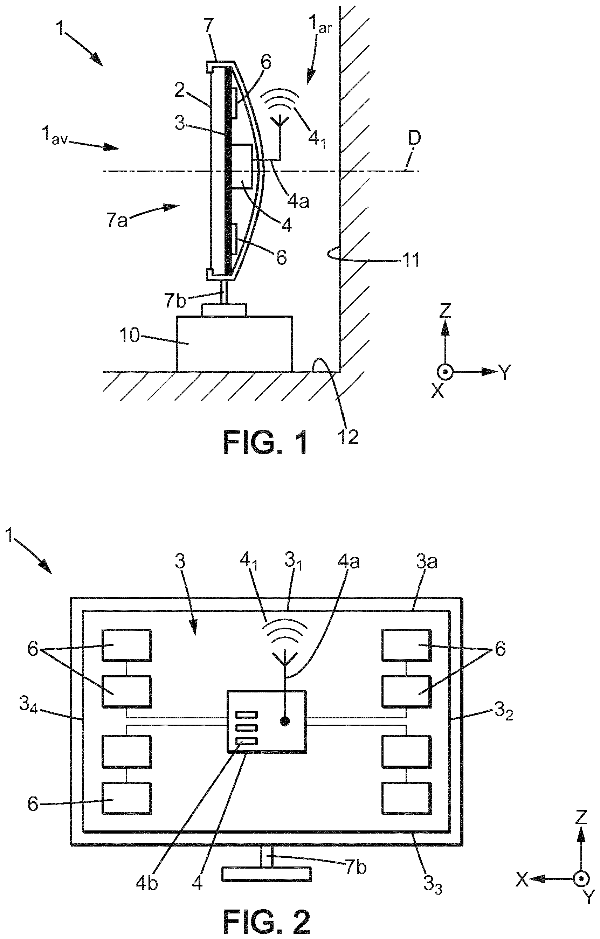

La **figure 1** est une vue en coupe simplifiée d'un dispositif d'affichage 1 selon l'invention.

Par dispositif d'affichage 1, on comprend tout type d'écran, tel qu'un appareil de télévision ou un moniteur d'ordinateur ou autres.

Le dispositif d'affichage 1 comprend une face avant 1ₐᵥ et une face arrière 1ₐᵣ, les faces avant et arrière étant opposées l'une de l'autre, la face avant étant dirigée sur les figures selon la direction Y négative et la face arrière étant dirigée selon la direction Y positive. D'une manière générale, on désignera qu'un élément est situé à l'avant d'un autre élément s'il est situé en direction Y négative par rapport à cet autre élément. Inversement, on désignera qu'un élément est situé à l'arrière d'un autre élément s'il est situé en direction Y par rapport à cet autre élément.

Le dispositif d'affichage 1 comprend :
- une dalle 2 situé en face avant 1ₐᵥ et adaptée pour générer un affichage visible sur cette face avant,
- un plan de masse 3 situé à l'arrière de la dalle 2 et adapté pour protéger la dalle 2 de l'environnement électromagnétique, et
- une unité de traitement 4 située à l'arrière du plan de masse 3 et reliée à la dalle 2 pour commander l'affichage de la dalle.

La dalle 2 peut être de divers types. Par exemple, la dalle 2 est de type :
- à cristaux liquides (LCD),
- à cristaux liquides avec rétroéclairage à diodes électroluminescentes (LCD LED ou LED),
- à diodes électroluminescentes organiques (OLED),
- à matrice active à diodes électroluminescentes organiques (AMOLED),
- à points quantiques et cristaux liquides (QLED),
- etc...

La dalle 2 a une forme généralement plane ou légèrement incurvée. Elle est fine, de faible épaisseur, par exemple inférieure à 5 mm, et de préférence inférieure à 3 mm.

La dalle 2 a souvent une dimension diagonale de grande taille. Cette dimension diagonale est exprimée dans ce domaine technique en pouces. Sa dimension est par exemple supérieure à 32 pouces, ou supérieure à 40 pouces ou même supérieure à 50 pouces. En fait, plus la dimension diagonale est grande plus le dispositif d'affichage aura des difficultés à obtenir un bon débit sur une connexion sans fil.

En outre, l'unité de traitement 4 comprend une antenne 4a de réception et/ou émission d'une onde 4₁ pour une connexion à un réseau sans fil qui alimente l'unité de traitement 4 avec un flux de données destiné à la commande de l'affichage.

En outre, l'unité de traitement 4 comprend un ou plusieurs connecteurs 4b pour une connexion filaire au réseau ou à une source de signaux et/ou données pour la commande de l'affichage.

Cette unité de traitement 4 comprend par exemple une pour son fonctionnement une alimentation, un microprocesseur et de mémoire. L'unité de traitement 4 peut être reliée au plan de masse 3 pour améliorer son effet de protection.

Par plan de masse 3, on comprend toute surface conductrice d'électricité, telle qu'une tôle ou plaque métallique ou une plaque recouverte d'une couche conductrice d'électricité. Ce plan de masse recouvre en grande partie ou complètement l'arrière de la dalle 2. Notamment, on considère que ce plan de masse recouvre au moins 80 % de la surface arrière de la dalle 2, et de préférence au moins 95 % de cette surface arrière.

Le dispositif d'affichage 1 comprend éventuellement un boitier 7. La dalle 2, le plan de masse 3 et l'unité de traitement 4 sont avantageusement situés dans le boitier 7. Ce boitier comprend une ouverture 7a au niveau de la face avant la pour que la dalle 2 soit visible depuis la face avant. L'antenne 4a se prolonge éventuellement en dehors du boitier 7 sur l'arrière, comme cela est visible en figure 1. En outre, le boitier 7 peut comprendre vers le bas (direction Z négative) un pied 7b adapté pour le poser sur le sol 12 ou un meuble 10. Le dispositif d'affichage 1 est souvent également placé à proximité d'un mur 11, sa face arrière 1ₐᵣ faisant face audit mur 11 et sa face avant 1ₐᵥ faisant face à un local.

Le dispositif d'affichage 1 selon l'invention comprend en outre une pluralité d'éléments réglables 6 reliés à l'unité de traitement 4, chaque élément réglable ayant une impédance qui peut être modifiée par l'unité de traitement pour modifier la manière dont l'onde est réfléchie et/ou transmisse par les éléments réglables, ces éléments réglables 6 étant situés du côté arrière du plan de masse 3, c'est-à-dire du côté de la face arrière 1ₐᵣ du dispositif d'affichage 1.

La pluralité d'éléments réglables 6 comprend au moins 2 éléments réglables et de préférence au moins dix éléments réglables. Ainsi, l'unité de traitement peut plus facilement agir sur l'onde 4₁.

Par éléments réglables 6, on comprend tout type d'éléments réglables adapté pour modifier la manière dont l'onde est réfléchie et/ou transmisse par les éléments réglables.

Selon un premier exemple, le document de brevet n° US 6 538 621 montre un exemple de surface électromagnétique dont l'impédance est adaptable ou modifiable. Cette surface électromagnétique comprend une pluralité d'éléments résonateurs, chaque élément résonateur étant réglable. La surface électromagnétique de ce document comprend des éléments plaques situés à distance d'un plan de masse, les éléments plaques voisins étant connectés entres eux par une capacité variable, chaque capacité variable pouvant être pilotée par un potentiel de commande. L'impédance de la surface électromagnétique est ainsi modifiée, par exemple pour focaliser l'onde réfléchie ou pour donner une direction spatiale à l'onde réfléchie 42. Eventuellement, la surface électromagnétique est constituée d'une pluralité de cellules, chaque cellule comprenant deux éléments résonateurs différents.

Selon un second exemple, le document de brevet n° WO 2015/039769 cite et montre d'autres types d'éléments résonateurs pouvant être utilisés dans une surface électromagnétique à impédance adaptable :
- Une diode variable peut remplacer la capacité variable,
- les éléments résonateurs peuvent être d'un seul type de polarisation ou de deux types de polarisation, éventuellement répartis de manière alternée sur la surface,
- les éléments résonateurs ont une ou plusieurs fréquences de résonnance pour contrôler une bande de fréquence prédéterminée,
- les éléments résonateurs sont des éléments binaires à deux états, par exemple définis par un changement de phase ou d'amplitude de l'onde modifiée.

De nombreuses variantes d'éléments résonateurs connus peuvent être utilisées pour former des éléments réglables d'une surface électromagnétique à impédance adaptable.

La **figure 2** est une vue arrière du dispositif d'affichage 1 sans le boitier 7, ce qui permet de visualiser au moins le plan de masse 3, l'unité de traitement 4 et les éléments réglables 6.

Le plan de masse 3 comprend un contour externe 3a, visible sur cette figure 2. Ce contour externe 3a est le périmètre de la forme du plan de masse. Ce contour externe 3a a un ou plusieurs bords 3₁, 3₂, 3₃, 3₄.

Comme représenté et telle que cela est habituel, la dalle 2 et le plan de masse 3 ont une forme rectangulaire. Les bords 3₁, 3₂, 3₃, 3₄ sont les quatre côtés de la forme rectangulaire.

Les éléments réglables 6 sont positionnés à l'intérieur du contour externe 3a et avantageusement à proximité d'un ou de plusieurs des bords du contour externe.

Par exemple, les éléments réglables 6 sont positionnés sur deux bords opposés 3₂, 3₄ du contour externe 3, comme représenté en figure 2.

Par exemple, les éléments réglables 6 sont positionnés sur les quatre bords 3₁, 3₂, 3₃, 3₄.

Par exemple, les éléments réglables 6 sont positionnés dans les coins du contour externe 3. Dans le cas de la forme rectangulaire de la figure 2, les éléments réglables 6 sont alors positionnés à proximité des jonctions des bords consécutifs.

De cette manière, les éléments réglables 6 captent des ondes de l'environnement externe du dispositif d'affichage 1, et ils ont plus d'effet pour la réception et/ou émission de l'onde par l'antenne 4a.

Selon des alternatives, plusieurs éléments réglables 6 sont interconnectés en un groupe, et le groupe est connecté directement à l'unité de traitement 4. Il peut y avoir plusieurs (deux ou plus) groupes regroupant deux ou plus d'éléments réglables 6. Ainsi, les connexions à l'unité de traitement sont simplifiées.

Les éléments réglables 6 de chaque groupe sont pilotables indépendamment les uns des autres avec un paramètre de réglage pour chaque élément réglable, ou de manière identique avec un seul paramètre de réglage, ce qui réduit le nombre de paramètres de réglages.

Eventuellement, deux éléments réglables 6 d'un groupe sont placés sur des bords opposés du contour externe 3 du plan de masse 3.

Les éléments réglables 6 sont éventuellement installés sur le plan de masse 3, par exemple par un adhésif. En outre, les éléments réglables 6 peuvent être connectés électriquement au plan de masse 3.

L'état des éléments réglables 6 est définit par un jeu de paramètres définit par l'unité de traitement 4 du dispositif d'affichage.

L'unité de traitement 4 du dispositif d'affichage pilote par exemple tous les éléments réglables (par exemple, capacité ou diode variables) ce qui permet de modifier son impédance. Cette modification est bien plus complexe qu'une focalisation ou une directivité spatiale. Elle modifie la répartition spatiale de l'onde radio dans une zone autour du dispositif d'affichage.

L'unité de traitement 4 surveille également l'onde reçue par l'antenne 4a : par exemple, elle détermine des informations de réception concernant la réception de l'onde par son antenne 4a, ces informations de réception étant par exemple le niveau de réception et/ou la qualité de réception.

Inversement, l'unité de traitement 4 reçoit par le flux de données de la connexion sans fil des informations d'émission de l'onde émise par lui-même et reçue par un autre dispositif ou dispositif annexe du réseau sans fil.

L'unité de traitement 4 utilise alors les informations de réception et/ou les informations d'émission pour estimer une valeur à optimiser, cette valeur étant une des informations ou une combinaison de ces informations.

L'unité de traitement 4 exécute par exemple un algorithme d'optimisation sur la base du jeu de paramètres précédents (temporellement), des valeurs estimées précédentes et de la valeur estimée actuelle.

L'algorithme d'optimisation peut être une maximisation ou une minimisation de la valeur estimée, selon la grandeur représentée par cette valeur. En une ou plusieurs étapes successives, l'algorithme d'optimisation permet d'obtenir un jeu de paramètres optimal. A chaque étape ou avec des périodicités prédéterminées, l'unité de traitement 4 applique le nouveau jeu de paramètres aux éléments réglables 6 et/ou détermine des informations de réceptions et/ou d'émission pour effectuer l'itération suivante.

Le jeu de paramètres optimal permet par exemple d'améliorer le niveau de réception de l'onde sur l'antenne 4a. Grâce à cette modification par l'état optimisé des éléments réglables 6 (modification de l'impédance électromagnétique des éléments réglables 6), le champ de propagation de l'onde est amélioré vers l'antenne 4a, et le débit du flux de données est augmenté.

Ainsi, l'unité de traitement 4 détermine le jeu de paramètres pour le réglage de la pluralité d'éléments réglables 6 par exemple pour optimiser la réception de l'onde 4₁ par l'antenne 4a. L'optimisation porte sur la valeur estimée qui est par exemple une estimation du niveau de réception et/ou de la qualité de réception de l'onde par l'antenne 4a.

Selon un mode de réalisation, l'unité de traitement 4 comprend une mémoire qui enregistre un ou plusieurs jeux de paramètres optimal correspondant à un réseau sans fil. De cette manière, l'algorithme d'optimisation peut démarrer son processus à partir de l'un ou de plusieurs des jeux de paramètres enregistrés ce qui permet de gagner du temps sur l'optimisation et d'éviter des effets transitoires de modification (augmentation) de débit au démarrage et donc ce qui évite des variations de qualité sur l'affichage.

Selon un mode de réalisation, l'algorithme d'optimisation surveille sa performance et arrête ses itérations d'optimisation lorsqu'un critère d'arrêt est atteint. On peut éviter ainsi des variations de qualité d'affichage.

Eventuellement, le réseau sans fil utilise plusieurs canaux indépendants dudit réseau pour transmettre le flux de données. L'optimisation peut faire évoluer (augmenter ou diminuer) le nombre de canaux utilisés pour le flux de données. Notamment, lorsque la réception de l'onde 4₁ par l'antenne 4a est améliorée, l'unité de traitement 4 peut augmenter le nombre de canaux. Lorsque la réception est détériorée, l'unité de traitement 4 peut diminuer le nombre de canaux. Comme cela est connu, les canaux sont par exemple répartis selon une pluralité de fréquences de la bande passante du réseau sans fil.

Eventuellement, l'optimisation porte sur des informations d'émission : c'est-à-dire la réception de l'onde émise par l'antenne 4a et reçue par un autre dispositif annexe connecté au réseau sans fil. Eventuellement, l'optimisation réalise un compromis entre la réception et l'émission, par le calcul d'une valeur qui est une combinaison des informations en réception et en émission comme déjà évoqué.

Eventuellement, en plus de l'optimisation de la réception de l'onde 4₁ par l'antenne 4a (amélioration du niveau de réception ou de la qualité de réception), l'optimisation porte également une minimisation la réception d'une autre onde d'un autre réseau sans fil. De cette manière, les éléments réglables 6 du dispositif d'affichage 1 permettent de diminuer la réception d'un ou plusieurs autres réseaux sans fil (par exemple un réseau sans fil d'un voisin) tout en conservant et/ou améliorant la réception du réseau sans fil comprenant le flux de données destiné à l'affichage du dispositif d'affichage 1.

Enfin, une antenne 4a peut comprendre plusieurs éléments d'antenne actifs avec une transmission de type multi-entrées multi-sorties (MIMO). La réception d'une telle antenne peut également être optimisée par les dispositions décrites ci-dessus.

Ainsi, grâces aux éléments réglables 6 pilotés pour optimiser la réception de l'antenne 4a, l'inconvénient du plan de masse 3 au dos (derrière) la dalle 2 du dispositif d'affichage 1 est levé de sorte que le dispositif d'affichage 1 conserve simultanément une grande qualité de l'affichage et un grand débit de données sur sa connexion sans fil.

## Revendications

1. **Dispositif d'affichage (1)** comprenant depuis une face avant (1ₐᵥ) et vers une face arrière (1ₐᵣ) :
- une dalle (2) adaptée pour générer un affichage visible sur la face avant,
- un plan de masse (3) adapté pour protéger la dalle de l'environnement électromagnétique, et
- une unité de traitement (4) reliée à la dalle pour commander l'affichage de la dalle, ladite unité de traitement comprenant une antenne (4a) de réception et/ou émission d'une onde (4₁) pour une connexion à un réseau sans fil qui alimente l'unité de traitement avec un flux de données destiné à la commande de l'affichage,
le dispositif d'affichage étant **caractérisé en ce qu'**il comprend en outre une pluralité d'éléments réglables (6) reliés à l'unité de traitement, chaque élément réglable ayant une impédance qui peut être modifiée par l'unité de traitement pour modifier la manière dont l'onde est réfléchie et/ou transmise par les éléments réglables, ces éléments réglables étant situés du côté arrière du plan de masse (3).

2. Le dispositif selon la revendication 1, dans lequel le plan de masse (3) comprend un contour externe et les éléments réglables sont positionnés sur un ou plusieurs bords du contour externe du plan de masse.

3. Le dispositif selon la revendication 1 ou la revendication 2, dans lequel le plan de masse (3) comprend un contour externe et les éléments réglables sont positionnés sur tout le contour externe du plan de masse.

4. Le dispositif selon l'une des revendications 1 à 3, dans lequel les éléments réglables (6) sont installés sur le plan de masse et les éléments réglables sont connectés au plan de masse.

5. Le dispositif selon l'une des revendications 1 à 4, dans lequel des éléments réglables (6) sont interconnectés en groupe et le groupe est relié directement à l'unité de traitement.

6. Le dispositif selon la revendication 5, dans lequel au moins deux éléments du groupe sont placés sur des bords opposés du contour externe du plan de masse.

7. Le dispositif selon l'une des revendications 1 à 6, dans lequel l'unité de traitement (4) détermine des paramètres de réglage de la pluralité d'éléments réglables pour optimiser la réception de l'onde par l'antenne.

8. Le dispositif selon la revendication 7, dans lequel l'optimisation porte sur une estimation de niveau de réception et/ou une estimation de qualité de réception.

9. Le dispositif selon l'une des revendications 7 à 8, dans lequel l'optimisation utilise également la réception de l'onde émise par l'antenne et reçue par un dispositif annexe connecté au réseau sans fil.

10. Le dispositif selon l'une des revendications 7 à 9, dans lequel l'optimisation minimise la réception d'une autre onde d'un autre réseau sans fil.

11. **Appareil de télévision** comprenant un dispositif d'affichage selon l'une des revendications 1 à 10 adapté à afficher un flux de données vidéo de diffusion d'une chaine de télévision.

12. **Moniteur d'ordinateur** comprenant un dispositif d'affichage selon l'une des revendications 1 à 10 adapté à afficher un flux de données correspondant à une image en provenance d'un ordinateur.

## Patentansprüche

1. Anzeige-Vorrichtung (1), umfassend, von einer Vorderseite (1ₐᵥ) aus und hin zu einer Rückseite (1ₐᵣ):
- eine Tafel (2), die dazu angepasst ist, eine auf der Vorderseite sichtbare Anzeige zu erzeugen,
- eine Masse-Ebene (3), die dazu angepasst ist, die Tafel vor der elektromagnetischen Umgebung zu schützen, und
- eine mit der Tafel verbundene Verarbeitungseinheit (4) zum Steuern der Anzeige der Tafel, wobei die Verarbeitungseinheit eine Antenne (4a) zum Empfangen und/oder Senden einer Welle (4₁) umfasst, zur Verbindung mit einem drahtlosen Netzwerk, das die Verarbeitungseinheit mit einem Datenstrom versorgt, der zur Steuerung der Anzeige bestimmt ist,
wobei die Anzeige-Vorrichtung **dadurch gekennzeichnet ist, dass** sie ferner mehrere einstellbare Elemente (6) umfasst, die mit der Verarbeitungseinheit verbunden sind, wobei jedes einstellbare Element eine Impedanz aufweist, die durch die Verarbeitungseinheit modifiziert werden kann, um die Art und Weise zu ändern, in der die Welle durch die einstellbaren Elemente reflektiert und/oder übertragen wird, wobei sich die einstellbaren Elemente auf der Rückseite der Masse-Ebene (3) befinden.

2. Vorrichtung nach Anspruch 1, wobei die Masse-Ebene (3) eine Außenkontur aufweist und die einstellbaren Elemente an einem oder mehreren Rändern der Außenkontur der Masse-Ebene positioniert sind.

3. Vorrichtung nach Anspruch 1 oder Anspruch 2, wobei die Masse-Ebene (3) eine Außenkontur umfasst und die einstellbaren Elemente entlang der gesamten Außenkontur der Masse-Ebene positioniert sind.

4. Vorrichtung nach einem der Ansprüche 1 bis 3, wobei die einstellbaren Elemente (6) an der Masse-Ebene installiert sind, und die einstellbaren Elemente mit der Masse-Ebene verbunden sind.

5. Vorrichtung nach einem der Ansprüche 1 bis 4, wobei die einstellbaren Elemente (6) zu einer Gruppe zusammengeschaltet sind, und die Gruppe direkt mit der Verarbeitungseinheit verbunden ist.

6. Vorrichtung nach Anspruch 5, wobei mindestens zwei Elemente der Gruppe an gegenüberliegenden Rändern der Außenkontur der Masse-Ebene platziert sind.

7. Vorrichtung nach einem der Ansprüche 1 bis 6, wobei die Verarbeitungseinheit (4) Einstellparameter der mehreren einstellbaren Elemente bestimmt, um den Empfang der Welle durch die Antenne zu optimieren.

8. Vorrichtung nach Anspruch 7, wobei die Optimierung eine Einschätzung des Empfangspegels und/oder eine Einschätzung der Empfangsqualität betrifft.

9. Vorrichtung nach einem der Ansprüche 7 bis 8, wobei die Optimierung auch den Empfang der von der Antenne ausgesendeten und von einer an das drahtlose Netzwerk angeschlossenen Nebenvorrichtung empfangenen Welle verwendet.

10. Vorrichtung nach einem der Ansprüche 7 bis 9, wobei die Optimierung den Empfang einer anderen Welle aus einem anderen drahtlosen Netzwerk minimiert.

11. Fernsehgerät mit einer Anzeigevorrichtung nach einem der Ansprüche 1 bis 10, die dazu angepasst ist, einen Sende-Videodatenstrom eines Fernsehkanals anzuzeigen.

12. Computermonitor mit einer Anzeigevorrichtung nach einem der Ansprüche 1 bis 10, die angepasst ist, um einen Datenstrom anzuzeigen, der einem von einem Computer kommenden Bild entspricht.

## Claims

1. **Display device (1)** comprising, from a front face (1ₐᵥ) towards a rear face (1ₐᵣ) :
- a panel (2) suitable for generating a visible display on the front face,
- a ground plane (3) suitable for protecting the panel from the electromagnetic environment, and
- a processing unit (4) connected to the panel in order to control the panel display, said processing unit comprising an antenna (4a) for receiving and/or emitting a wave (4₁) for connection to a wireless network which supplies the processing unit with a stream of data intended for controlling the display, the display device being **characterized in that** it further comprises a plurality of adjustable elements (6) connected to the processing unit, each adjustable element having an impedance which can be modified by the processing unit in order to change the manner in which the wave is reflected and/or transmitted by the adjustable elements, these adjustable elements being located on the rear side of the ground plane (3).

2. Device according to claim 1, wherein the ground plane (3) comprises an outer contour and the adjustable elements are positioned on one or more edges of the outer contour of the ground plane.

3. Device according to claim 1 or claim 2, wherein the ground plane (3) comprises an outer contour and the adjustable elements are positioned along the entire outer contour of the mass plane.

4. Device according to one of claims 1 to 3, wherein the adjustable elements (6) are installed on the ground plane and the adjustable elements are connected to the ground plane.

5. Device according to one of claims 1 to 4, wherein adjustable elements (6) are interconnected as a group and the group is directly connected to the processing unit.

6. Device according to claim 5, wherein at least two elements of the group are placed on opposite edges of the outer contour of the ground plane.

7. Device according to one of claims 1 to 6, wherein the processing unit (4) determines adjustment parameters for the plurality of adjustable elements in order to optimize reception of the wave by the antenna.

8. Device according to claim 7, wherein the optimization concerns an estimation of the reception level and/or an estimation of the reception quality.

9. Device according to one of claims 7 to 8, wherein the optimization also uses the reception of the wave emitted by the antenna and received by an accessory device connected to the wireless network.

10. Device according to one of claims 7 to 9, wherein the optimization minimizes the reception of another wave from another wireless network.

11. **Television set** comprising a display device according to one of claims 1 to 10, suitable for displaying a stream of broadcast video data from a television channel.

12. **Computer monitor** comprising a display device according to one of claims 1 to 10, suitable for displaying a stream of data corresponding to an image coming from a computer.
